# FASCICULE DE BREVET EUROPEEN

(11) **EP 3 617 490 B1**
(45) Date de publication et mention de la délivrance du brevet: **03.11.2021**
(21) Numéro de dépôt: 19193862.0
(22) Date de dépôt: 27.08.2019
(51) Int. Cl.: F02K 3/06, F02C 9/18, F02K 1/82

(54) **ÉCOPE DE PRÉLÉVEMENT D'AIR POUR AÉRONEF**
VORRICHTUNG FÜR LUFTENTNAHME EINES LUFTFAHRZEUGES
AIR BLEEDING SCOOP FOR AN AIRCRAFT

(30) Priorité: 27.08.2018 FR 1857685
(43) Date de publication de la demande: 04.03.2020
(73) Titulaire: Safran Nacelles, 76700 Gonfreville-l'Orcher (FR)
(72) Inventeur: BELLET, François, 77550 MOISSY CRAMAYEL (FR); VALLEROY, Laurent Georges, 77550 MOISSY CRAMAYEL (FR); DAVID, Mathieu, 77550 MOISSY CRAMAYEL (FR)
(74) Mandataire: Germain Maureau

(56) Documents cités:
- WO-A1-2013/068671
- FR-A1- 2 879 563
- FR-A1- 2 879 564
- US-A- 6 050 527

## Description

La présente invention concerne une écope de prélèvement d'air, et plus particulièrement une écope de prélèvement d'air pour nacelle d'aéronef.

De manière générale, les écopes de prélèvement d'air sont des dispositifs permettant de dévier un flux d'air de façon à utiliser ce flux d'air par exemple pour le refroidissement d'un équipement.

Il existe deux types d'écopes de prélèvement d'air : les écopes dynamiques et les écopes statiques.

Les écopes dynamiques présentent une ouverture en saillie dans la zone de flux d'air à prélever de façon à capter le flux d'air dans l'ouverture afin de le rediriger dans la zone souhaitée. Au contraire, les écopes statiques présentent une ouverture non saillante de façon à assurer l'aérodynamisme de la structure comportant l'écope. C'est un différentiel de pression entre la zone de prélèvement d'air et la zone dans laquelle le flux d'air est destiné à être redirigé qui permet de prélever l'air dans le cas des écopes statiques.

Un aéronef est mû par au moins un ensemble propulsif comportant un turboréacteur logé dans une nacelle présentant généralement une structure tubulaire comprenant une entrée d'air en avant du turboréacteur, une section médiane destinée à entourer une soufflante du turboréacteur, une section arrière destinée à entourer la chambre de combustion du turboréacteur et pouvant abriter des moyens d'inversion de poussée.

Les nacelles modernes sont souvent destinées à abriter un turboréacteur double flux apte à générer, un flux d'air chaud, dit primaire.

Une nacelle comprend généralement une structure externe comprenant l'entrée d'air, la section médiane et la section arrière, et une structure interne concentrique de la section arrière, dite Inner Fixed Structure (IFS) entourant le cœur du turboréacteur en arrière de la soufflante. Ces structures externe et interne définissent un canal annulaire d'écoulement, encore appelé veine secondaire, visant à canaliser un flux d'air froid, dit secondaire, qui circule à l'extérieur du turboréacteur.

La section médiane de la nacelle peut également être appelée capot de carter de soufflante, tandis que la section arrière peut également être appelée inverseur de poussée, ou capot coulissant s'il est apte à coulisser longitudinalement.

La structure arrière du cœur du turboréacteur est terminée par une tuyère dite primaire assurant l'éjection du flux primaire d'air chaud. La structure externe de la nacelle est, quant à elle, généralement terminée par une tuyère dite secondaire pouvant être à section variable et optimisant l'éjection du flux secondaire d'air froid.

La structure interne de la nacelle constitue ainsi un capotage autour du cœur du turboréacteur et peut être désigné sous différents noms, notamment capot cœur arrière (Aft Core Cowl, ACC).

L'invention sera plus particulièrement décrite au regard d'une écope statique de prélèvement d'air pour nacelle d'aéronef, destinée à prélever un flux d'air froid provenant de la veine secondaire pour le canaliser dans une conduite à des fins de refroidissement de la turbine du turboréacteur.

Ce type d'écope de prélèvement d'air est destinée à être fixée par boulonnage sur la face interne de la structure interne fixe d'une nacelle d'aéronef, au niveau d'un orifice de cette structure interne fixe, et comporte de manière connue une bouche d'entrée d'air présentant une paroi destinée à déboucher radialement, de préférence avec un angle facilitant l'entrée d'un flux d'air dans l'écope, dans le turboréacteur de l'aéronef. L'écope présente en outre une collerette périphérique qui entoure la bouche d'entrée d'air au niveau de son extrémité destinée à être fixée à la structure interne fixe, l'écope étant fixée à la structure interne fixe par l'intermédiaire de cette collerette. La collerette et la paroi de l'écope sont monobloc. Une conduite est destinée à être fixée à cette écope, du côté opposé à la collerette, par l'intermédiaire d'une plaque d'interface fixée à ladite conduite et d'une plaque d'appui fixée sur la paroi de la bouche d'entrée d'air de l'écope, un joint étant disposé entre les plaques d'interface et d'appui. Les plaques d'interface et d'appui sont sensiblement parallèle à la collerette de l'écope.

Ainsi, une partie du flux d'air provenant de la veine secondaire de la nacelle est dévié dans l'écope puis dans la conduite, grâce à un différentiel de pression entre la veine secondaire et la conduite.

Au niveau de la zone de jonction entre l'écope et la conduite, une partie du flux d'air dévié a tendance à s'échapper pour se loger dans un espace entre le joint, la plaque d'interface et la plaque d'appui, ce qui a pour effet d'augmenter la pression dans ledit espace.

Afin d'éviter les cassures au niveau de la plaque d'appui, qui auraient pour conséquence des fuites de flux d'air, ladite plaque est usuellement réalisée dans des matériaux résistants à la pression générée dans l'espace entre le joint et les plaques d'interface et d'appui.

En outre, la paroi de l'écope peut être sujette à des cassures, à cause par exemple d'impacts de débris ou à cause de la pression du flux d'air lors de sa déviation dans l'écope. Afin d'éviter ces cassures qui peuvent engendrer des fuites d'air, ladite paroi est également réalisée dans des matériaux résistants à ces impacts et à de fortes pressions.

Ainsi, de telles écopes ont à la fois une fonction aérodynamique et une fonction d'étanchéité.

Par fonction aérodynamique on entend une fonction de déviation du flux d'air ; et par fonction d'étanchéité on entend une fonction de barrière pression.

Les matériaux résistants à la pression et résistants aux impacts sont par exemple des matériaux composites tels que le carbone époxy, ou des métaux tels que le carbone, l'aluminium, le titane ou des aliages.

Les inconvénients de ce type de matériaux sont qu'ils sont couteux et difficiles à mettre en œuvre pour la fabrication des écopes. Ainsi, les couts de fabrication sont très importants.

Les documents FR 2 879 564 A1 et US 6 050 527 A divulguent d'autres nacelles d'aéronef.

L'invention a pour but de remédier à ces inconvénients tout en évitant les fuites d'air qui dégraderaient les performances du prélèvement d'air.

A cet effet, l'invention propose une écope de prélèvement d'air destinée à être fixée sur un panneau d'un aéronef, au niveau d'un orifice de ce panneau et à une conduite de circulation d'air, ladite écope comportant :
- une bouche d'entrée d'air présentant une paroi destinée à être en saillie d'un côté du panneau opposé à l'air à prélever ;
- une collerette périphérique au niveau d'une extrémité de la bouche d'entrée d'air destinée à être fixée au panneau ;
- un élément d'appui destiné à supporter la conduite de circulation d'air ;
caractérisée en ce que la bouche d'entrée d'air est en matériau thermoplastique et l'élément d'appui est fixé sur la collerette périphérique de sorte à réaliser une barrière pression en cas de rupture de la paroi de la bouche d'entrée d'air, permettant d'éviter des fuites de flux d'air.

Ainsi, les couts de fabrication de l'écope de prélèvement d'air sont réduits par rapport à ceux de l'art antérieur du fait de la facilité de mise en œuvre des matériaux thermoplastiques et du fait du faible coût de ces matériaux.

En outre, les fonctions aérodynamiques et d'étanchéité de l'écope selon l'invention sont séparées : la bouche d'entrée d'air en matériau thermoplastique a uniquement une fonction aérodynamique tandis que l'élément d'appui a une fonction d'étanchéité.

Selon d'autres caractéristiques de l'invention, l'écope de prélèvement d'air de l'invention comporte l'une ou plusieurs des caractéristiques optionnelles suivantes considérées seules ou selon toutes les combinaisons possibles.

Selon une caractéristique, la collerette périphérique entoure la bouche d'entrée d'air.

Selon une autre caractéristique, l'élément d'appui est concentrique à la bouche d'entrée d'air.

L'élément d'appui comporte avantageusement une plaque d'appui destinée à supporter la conduite de circulation d'air, de préférence par l'intermédiaire d'un joint.

La plaque d'appui est sensiblement parallèle à la collerette.

Selon une caractéristique, l'élément d'appui comporte une base fixée à la collerette de sorte à réaliser la barrière pression en cas de rupture de la paroi de la bouche d'entrée d'air.

De préférence, la base de l'élément d'appui est en forme de L dont une branche est fixée à la collerette, parallèlement à ladite collerette, et l'autre branche permet de réaliser la barrière pression en cas de rupture de la paroi de la bouche d'entrée d'air.

Selon cette caractéristique, la branche fixée à la collerette est de préférence tournée vers la direction opposée à la bouche d'entrée d'air.

L'élément d'appui comporte avantageusement des raidisseurs.

Dans le mode de réalisation selon lequel l'élément d'appui comporte une base en forme de L, les raidisseurs sont disposées entre la plaque d'appui et la branche de la base fixée à la collerette, lesdits raidisseurs étant sensiblement perpendiculaires à ladite plaque et ladite branche.

Ces raidisseurs permettent de rigidifier la barrière pression, et de transmettre les efforts de compression du joint.

La base et la plaque d'appui sont de préférence monobloc.

Selon une caractéristique, l'écope est une écope statique.

Selon une autre caractéristique, la bouche d'entrée d'air et la collerette sont monobloc.

Dans un mode de réalisation, l'élément d'appui est également en matériau thermoplastique.

En variante, l'élément d'appui est en matériau composite, en carbone ou en métal.

Les matériaux thermoplastiques utilisés sont de préférence des matériaux souples tels que le polyamide, le Polyéthylène téréphtalate ou encore le Polyoxyméthylène.

De préférence la paroi est adaptée pour faciliter l'entrée d'un flux d'air dans l'écope et la continuité aérodynamique.

A cet effet, la paroi prolonge la collerette par une ligne courbe.

L'invention concerne en outre une structure interne fixe de nacelle d'aéronef comportant une écope telle que décrite précédemment.

L'invention concerne également une nacelle d'aéronef comportant une écope telle que décrite précédemment.

D'autres caractéristiques et avantages de l'invention apparaîtront à la lecture de la description détaillée qui suit pour la compréhension de laquelle on se reportera aux dessins annexés dans lesquels :
- la figure 1 est une vue partielle schématique illustrant une écope statique de prélèvement d'air de l'art antérieur, fixée sur la face interne d'une structure interne fixe d'une nacelle d'aéronef ;
- la figure 2 est une vue partielle schématique illustrant une écope de prélèvement d'air selon l'invention, fixée sur la face interne d'une structure interne fixe d'une nacelle d'aéronef ;
- la figure 3 est une vue schématique en coupe d'un mode de réalisation d'une écope selon l'invention comportant des raidisseurs.

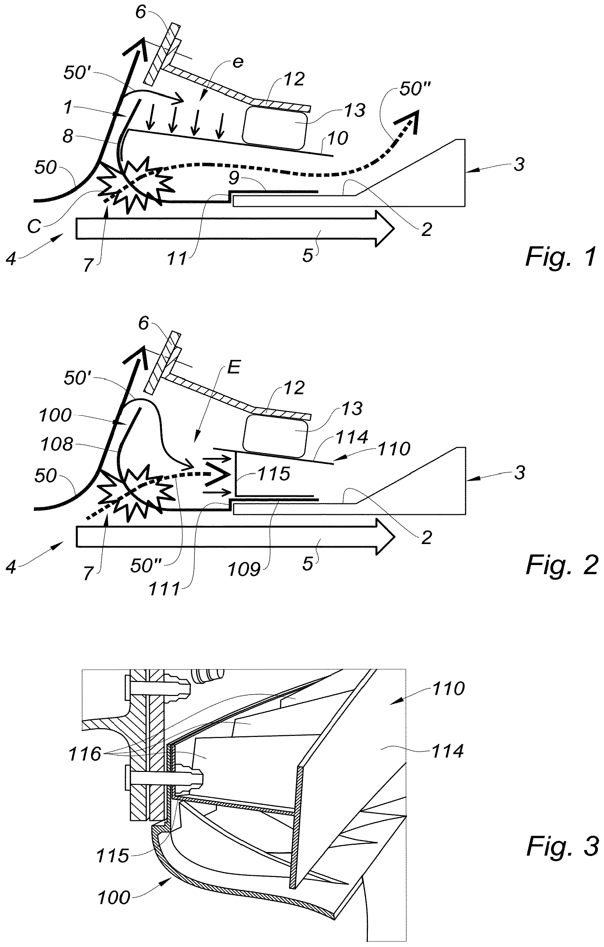

La figure 1 représente une écope 1 de prélèvement d'air de l'art antérieur fixée par boulonnage (non représenté), par son extrémité proximale, sur la face interne 2 d'une structure interne fixe 3 d'une nacelle d'aéronef, ladite structure interne fixe 3 définissant, avec une structure externe (non représentée), un canal annulaire d'écoulement 4, encore appelé veine secondaire, dans lequel circule un flux d'air froid 5, dit secondaire, ladite écope 1 étant en outre fixée, par son extrémité distale, à une conduite 6 destinée à déboucher dans un turboréacteur (non représenté) de l'aéronef.

L'écope 1 est fixée, par son extrémité proximale, au niveau d'un orifice 7 de cette structure interne fixe 3.

L'écope 1 permet de prélever un flux d'air 50, appelé flux d'air prélevé, provenant du flux d'air froid 5 de la veine secondaire 4.

Le flux d'air prélevé 50 est alors canalisé dans la conduite 6 à des fins de refroidissement de la turbine du turboréacteur.

L'écope 1 est réalisée en matériaux résistants à la pression et aux impacts, tel que les matériaux composites comme le carbone époxy, ou les métaux comme le carbone, l'aluminium, le titane ou des aliages.

L'écope 1 selon l'art antérieur comporte une bouche d'entrée d'air 8 en saillie du côté de la face interne 2 de la structure interne fixe 3, une collerette périphérique 9 qui entoure la bouche d'entrée d'air 8 au niveau de son extrémité proximale par rapport à la structure interne fixe 3, et un élément d'appui 10 fixé sur la bouche d'entrée d'air 8 de l'écope 1 et destiné à supporter la conduite 6.

L'écope 1 est fixée à la face interne 2 de la structure interne fixe 3 par la collerette périphérique 9.

La bouche d'entrée d'air 8 présente une extrémité distale libre affleurant la conduite 6.

La bouche d'entrée d'air 8 présente une forme facilitant l'entrée du flux d'air prélevé 50 dans l'écope 1, et assurant la continuité aérodynamique entre la structure interne fixe 3 et l'écope 1.

La continuité aérodynamique entre la structure interne fixe 3 et l'écope 1 est assurée par un décroché 11 d'une hauteur sensiblement identique à l'épaisseur de la structure interne fixe 3, présent au niveau de la jointure entre la collerette périphérique 9 et la bouche d'entrée d'air 8.

L'entrée d'air dans l'écope est facilitée par la forme courbe de la bouche d'entrée d'air 8.

La collerette périphérique 9 et la bouche d'entrée d'air 8 sont monobloc.

L'élément d'appui 10 permet la fixation de l'écope 1 à la conduite 6.

A cet effet, la conduite 6 comporte un élément d'interface 12 qui coopère avec l'élément d'appui 10 par l'intermédiaire d'un joint 13.

Les éléments d'appui 10 et d'interface 12 sont sensiblement parallèle à la collerette périphérique 9 de l'écope 1.

Au niveau de la zone de jonction entre l'écope 1 et la conduite 6, une partie 50' du flux d'air dévié 50 a tendance à s'échapper pour se loger dans un espace « e » entre l'élément d'interface 12, le joint 13, et l'élément d'appui 10, ce qui a pour effet d'augmenter la pression dans ledit espace « e ».

L'élément d'appui 10 de l'écope 1 réalise alors une barrière étanche permettant d'éviter les fuites de flux d'air prélevé 50.

Par ailleurs, la bouche d'entrée d'air 8 étant sujette à des impacts de débris et à de fortes pression de flux d'air dévié, les matériaux résistants à la pression et aux impacts composant l'écope, permettent d'éviter des cassures C, et par la même occasion des fuites 50" d'air par la paroi de la bouche d'entrée d'air 8 de l'écope 1.

La figure 2 représente une écope 100 de prélèvement d'air selon l'invention, fixée par boulonnage (non représenté), par son extrémité proximale, sur la face interne 2 d'une structure interne fixe 3 d'une nacelle d'aéronef, ladite structure interne fixe 3 définissant, avec une structure externe (non représentée), un canal annulaire d'écoulement 4, encore appelé veine secondaire, dans lequel circule un flux d'air froid 5, dit secondaire, ladite écope 100 étant en outre fixée, par son extrémité distale, à une conduite 6 destinée à déboucher dans un turboréacteur (non représenté) de l'aéronef.

L'écope 100 est fixée, par son extrémité proximale, au niveau d'un orifice 7 de cette structure interne fixe 3.

L'écope 100 permet de prélever un flux d'air 50, appelé flux d'air prélevé, provenant du flux d'air froid 5 de la veine secondaire 4.

Le flux d'air prélevé 50 est alors canalisé dans la conduite 6 à des fins de refroidissement de la turbine du turboréacteur.

L'écope 100 comporte une bouche d'entrée d'air 108 en saillie du côté de la face interne 2 de la structure interne fixe 3, une collerette périphérique 109 qui entoure la bouche d'entrée d'air 108 au niveau de son extrémité proximale vis-à-vis de la structure interne fixe 3, et un élément d'appui 110 fixé sur la collerette périphérique 109 et destiné à supporter la conduite 6.

L'écope 100 est fixée à la face interne 2 de la structure interne fixe 3 par la collerette périphérique 109.

La bouche d'entrée d'air 108 présente une extrémité distale libre affleurant la conduite 6.

La bouche d'entrée d'air 108 est en matériau thermoplastique tel que le polyamide, le Polyéthylène téréphtalate ou encore le Polyoxyméthylène.

La bouche d'entrée d'air 108 présente une forme facilitant l'entrée du flux d'air prélevé 50 dans l'écope 100, et assurant la continuité aérodynamique entre la structure interne fixe 3 et l'écope 100.

La continuité aérodynamique entre la structure interne fixe 3 et l'écope 100 est assurée par un décroché 111 d'une hauteur sensiblement identique à l'épaisseur de la structure interne fixe 3, présent au niveau de la jointure entre la collerette périphérique 109 et la bouche d'entrée d'air 108.

L'entrée d'air dans l'écope est facilitée par la forme courbe de la bouche d'entrée d'air 108.

La collerette périphérique 109 et la bouche d'entrée d'air 108 sont monobloc.

L'élément d'appui 110 permet la jonction étanche de la conduite 6 à l'écope 100.

L'élément d'appui 110 permet la fixation de l'écope 100 à la conduite 6.

A cet effet, la conduite 6 comporte un élément d'interface 12 qui coopère avec l'élément d'appui 110 par l'intermédiaire d'un joint 13.

L'élément d'appui 110 est concentrique à la bouche d'entrée d'air 108.

Il comporte avantageusement une plaque d'appui 114 sensiblement parallèle à la collerette périphérique 109, la plaque d'appui 114 étant destinée à supporter la conduite 6, par l'intermédiaire du joint 13.

L'élément d'appui comporte en outre une base 115 en forme de L dont une première branche est fixée à la collerette périphérique 109, parallèlement à ladite collerette 109, et dont la deuxième branche permet de relier la première branche à la plaque d'appui 114.

La base 115 et la plaque d'appui 110 sont monobloc.

Au niveau de la zone de jonction entre l'écope 100 et la conduite 6, une partie 50' du flux d'air dévié 50 a tendance à s'échapper pour se loger dans un espace E entre l'élément d'interface 12, le joint 13, l'élément d'appui 110, et la bouche d'entrée d'air 108, ce qui a pour effet d'augmenter la pression dans ledit espace E.

La deuxième branche de la base 115 de l'élément d'appui 110 de l'écope 100 réalise alors une barrière étanche permettant d'éviter les fuites de flux d'air prélevé 50.

Par ailleurs, la bouche d'entrée d'air 108 étant sujette à des impacts de débris et à de fortes pression de flux d'air dévié, des cassures C peuvent apparaitre dans sa paroi, et par la même occasion des fuites 50" d'air. La deuxième branche de la base 115 de l'élément d'appui 110 de l'écope 100 réalise alors une barrière étanche permettant d'éviter les fuites de flux d'air.

L'élément d'appui 110 est réalisé en matériaux résistants aux efforts générés par la pression, tels que des materiaux thermoplastiques chargés comme par exemple le polyétheréthercétone, le polyamide chargé de verre, de carbone, de fibre d'aramide ou tout autre aliage métallique comme l'aluminium ou le titane.

Dans un mode de réalisation, l'élément d'appui 110 est renforcé par des raidisseurs 116 (figure 3).

La première branche de la base 115 de l'élément d'appui 110 est tournée vers la direction opposée à la bouche d'entrée d'air 108.

La figure 3 représente un mode de réalisation d'une écope 100 selon l'invention comportant des raidisseurs 116 disposées entre la plaque d'appui 114 et la base 115 de l'élément d'appui 110.

Les raidisseurs 116 sont sensiblement perpendiculaires à la plaque d'appui 114.

Ils permettent de rigidifier l'élément d'appui 110, et ainsi consolider la barrière d'étanchéité.

Ils permettent également de transmettre les efforts de compression du joint 13 (figure 2).

## Revendications

1. Ecope (100) de prélèvement d'air destinée à être fixée sur un panneau (3) d'un aéronef, au niveau d'un orifice (7) de ce panneau et à une conduite (6) de circulation du flux d'air prélevé (50), ladite écope (100) comportant :
- Une bouche d'entrée d'air (108) présentant une paroi destinée à être en saillie d'un côté du panneau (3) opposé à l'air à prélever ;
- une collerette périphérique (109) au niveau d'une extrémité de la bouche d'entrée d'air (108) destinée à être fixée au panneau (3) ; et
- un élément d'appui (110) destiné à supporter la conduite (6) de circulation d'air;
**caractérisée en ce que** la bouche d'entrée d'air (108) est en matériau thermoplastique et l'élément d'appui (110) est fixé sur la collerette périphérique (109) de sorte à réaliser une barrière pression en cas de rupture de la paroi de la bouche d'entrée d'air (108).

2. Ecope selon la revendication précédente, dans laquelle l'élément d'appui (110) comporte une plaque d'appui (114) destinée à supporter la conduite (6) de circulation d'air, de préférence par l'intermédiaire d'un joint (13).

3. Ecope selon l'une quelconque des revendications précédentes, dans laquelle l'élément d'appui (110) comporte une base (115) fixée à la collerette (109) de sorte à réaliser la barrière pression en cas de rupture de la paroi de la bouche d'entrée d'air (108).

4. Ecope selon la revendication précédente, dans laquelle la base (115) de l'élément d'appui (110) est en forme de L dont une branche est fixée à la collerette (109), parallèlement à ladite collerette (109), et l'autre branche permet de réaliser la barrière pression en cas de rupture de la paroi de la bouche d'entrée d'air.

5. Ecope selon l'une quelconque des revendications précédentes, dans laquelle l'élément d'appui comporte des raidisseurs.

6. Ecope selon la revendication précédente en combinaison avec la revendication 3, dans laquelle les raidisseurs (116) sont disposées entre la plaque d'appui (114) et la branche de la base (115) fixée à la collerette (109), lesdits raidisseurs (116) étant sensiblement perpendiculaires à ladite plaque (114) et ladite branche.

7. Ecope selon l'une quelconque des revendications précédentes, dans laquelle la bouche d'entrée d'air (108) et la collerette (109) sont monobloc.

8. Ecope selon l'une quelconque des revendications précédentes, dans laquelle l'élément d'appui (110) est en matériau thermoplastique.

9. Structure interne fixe de nacelle d'aéronef comportant une écope selon l'une quelconque des revendications précédentes.

10. Nacelle d'aéronef comportant une écope selon l'une quelconque des revendications 1 à 8.

## Patentansprüche

1. Vorrichtung (100) für die Luftentnahme, die zur Befestigung an einem Modul (3) eines Luftfahrzeugs im Bereich einer Öffnung (7) dieses Modul und an einem Luftzirkulationskanal (6) des entnommenen Luftstroms (50) bestimmt ist, wobei die Vorrichtung (100) aufweist:
- eine Lufteintrittsmündung (108), die eine Wand aufweist, die bestimmt ist, auf einer Seite des Moduls (3) gegenüber der zu entnehmenden Luft hervorzustehen;
- einen peripheren Kragen (109) im Bereich eines Endes der Lufteintrittsmündung (108), der zur Befestigung an dem Modul (3) bestimmt ist; und
- ein Stützelement (110), das zum Stützen des Luftzirkulationskanals (6) bestimmt ist;
**dadurch gekennzeichnet, dass** die Lufteintrittsmündung (108) aus thermoplastischem Material ist und das Stützelement (110) auf dem peripheren Kragen (109) befestigt ist, so dass im Fall eines Bruchs der Wand der Lufteintrittsmündung (108) eine Druckbarriere hergestellt wird.

2. Vorrichtung nach vorangehendem Anspruch, wobei das Stützelement (110) eine Stützplatte (114) aufweist, die zum Stützen des Luftzirkulationskanals (6) bestimmt ist, vorzugsweise über eine Dichtung (13).

3. Vorrichtung nach einem der vorangehenden Ansprüche, wobei das Stützelement (110) eine Basis (115) aufweist, die derart an dem Kragen (109) befestigt ist, dass im Fall eines Bruchs der Wand der Lufteintrittsmündung (108) eine Druckbarriere hergestellt wird.

4. Vorrichtung nach vorangehendem Anspruch, wobei die Basis (115) des Stützelements (110) in Form eines L ist, von dem ein Schenkel am Kragen (109) parallel zum Kragen (109) befestigt ist und der andere Schenkel erlaubt, im Fall eines Bruchs der Wand der Lufteintrittsmündung die Druckbarriere herzustellen.

5. Vorrichtung nach einem der vorangehenden Ansprüche, wobei das Stützelement Versteifungen aufweist.

6. Vorrichtung nach vorangehendem Anspruch in Kombination mit Anspruch 3, wobei die Versteifungen (116) zwischen der Stützplatte (114) und dem Schenkel der Basis (115) angeordnet sind, der am Kragen (109) befestigt ist, wobei die Versteifungen (116) etwa senkrecht zu der Platte (114) und dem Schenkel sind.

7. Vorrichtung nach einem der vorangehenden Ansprüche, wobei die Lufteintrittsmündung (108) und der Kragen (109) einteilig sind.

8. Vorrichtung nach einem der vorangehenden Ansprüche, wobei das Stützelement (110) aus thermoplastischem Material ist.

9. Feste Innenstruktur einer Gondel eines Luftfahrzeugs, aufweisend eine Vorrichtung nach einem der vorangehenden Ansprüche.

10. Gondel eines Luftfahrzeugs, aufweisend eine Vorrichtung nach einem der Ansprüche 1 bis 8.

## Claims

1. An air intake scoop (100) intended to be fastened on a panel (3) of an aircraft, at an orifice (7) of the panel and to an air circulation duct (6) for the drawn air flow (50), said scoop (100) including:
- an air inlet mouth (108) having a wall intended to project from one side of the panel (3) opposite to the air to be drawn;
- a peripheral collar (109) at one end of the air inlet mouth (108) intended to be fastened to the panel (3); and
- a bearing element (110) intended to support the air circulation duct (6);
**characterized in that** the air inlet mouth (108) is made of a thermoplastic material and the bearing element (110) is fastened on the peripheral collar (109) so as to achieve a pressure barrier in case of breakage of the wall of the air inlet mouth (108).

2. The scoop according to the preceding claim, wherein the bearing element (110) includes a bearing plate (114) intended to support the air circulation duct (6), preferably via a seal (13).

3. The scoop according to any one of the preceding claims, wherein the bearing element (110) includes a base (115) fastened to the collar (109) so as to achieve the pressure barrier in case of breakage of the wall of the air inlet mouth (108).

4. The scoop according to the preceding claim, wherein the base (115) of the bearing element (110) is L-shaped and comprises one branch fastened to the collar (109), parallel to said collar (109), and one other branch allowing achieving the pressure barrier in case of breakage of the wall of the air inlet mouth.

5. The scoop according to any one of the preceding claims, wherein the bearing element includes stiffeners.

6. The scoop according to the preceding claim in combination with claim 3, wherein the stiffeners (116) are disposed between the bearing plate (114) and the branch of the base (115) fastened to the collar (109), said stiffeners (116) being substantially perpendicular to said plate (114) and said branch.

7. The scoop according to any one of the preceding claims, wherein the air inlet mouth (108) and the collar (109) are integrally made in one piece.

8. The scoop according to any one of the preceding claims, wherein the bearing element (110) is made of a thermoplastic material.

9. An inner fixed structure of an aircraft nacelle including a scoop according to any one of the preceding claims.

10. An aircraft nacelle including a scoop according to any one of claims 1 to 8.
